# EUROPEAN PATENT APPLICATION

(11) **EP 4 572 510 A1**
(43) Date of publication of application: **18.06.2025**
(21) Application number: 23853055.4
(22) Date of filing: 11.08.2023
(51) Int. Cl.: H04W 74/08, H04W 74/00, H04W 72/232, H04W 72/04, H04W 88/02

(54) **SIGNAL TRANSMISSION AND RECEPTION METHOD FOR WIRELESS COMMUNICATION AND APPARATUS THEREFOR**

(30) Priority: 11.08.2022 US 202263397368 P
(71) Applicant: LG Electronics Inc., Yeongdeungpo-gu Seoul 07336 (KR)
(72) Inventor: LEE, Youngdae, Seoul 06772 (KR); KIM, Jaehyung, Seoul 06772 (KR); YANG, Suckchel, Seoul 06772 (KR); KIM, Seonwook, Seoul 06772 (KR)
(74) Representative: Mooser, Sebastian Thomas
(86) International application number: PCT/KR2023/011897
(87) International publication number: WO 2024/035188

(57) **Abstract**

A method by which a UE performs a random access procedure in a wireless communication system, according to an embodiment, comprises: transmitting a random access preamble via a physical random access channel (PRACH); receiving, via a physical downlink control channel (PDCCH), downlink control information (DCI) scheduling a random access response (RAR) to the transmission of the random access preamble in a first time duration; and, on the basis of the DCI, receiving a physical downlink shared channel (PDSCH) including the RAR, wherein the UE is a first type UE from among a first type reduced capability (RedCap) UE that supports different bandwidths for the PDCCH and the PDSCH and a second type RedCap UE that supports a bandwidth of the same size for the PDCCH and the PDSCH, and the first time duration may be configured for an RAR of the first type RedCap UE, excluding an RAR of the second type RedCap UE.

## Description

### TECHNICAL FIELD

The present disclosure relates to wireless communication, and more particularly, to a method of transmitting or receiving an uplink/downlink signal in a wireless communication system and apparatus therefor.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

The object of the present disclosure is to provide a method of transmitting and receiving signals more accurately and efficiently.

The objects of present disclosure are not limited to what has been particularly described hereinabove, and other objects that the present disclosure could achieve will be more clearly understood from the following detailed description.

### TECHNICAL SOLUTION

According to an aspect, a method of performing a random access procedure by a user equipment (UE) in a wireless communication system may include transmitting a random access preamble through a physical random access channel (PRACH), receiving downlink control information (DCI) scheduling a random access response (RAR) for the transmission of the random access preamble through a physical downlink control channel (PDCCH) in a first time period, and receiving a physical downlink shared channel (PDSCH) including the RAR based on the DCI. The UE may be a first type reduced capability (RedCap) UE supporting different bandwidths for the PDCCH and the PDSCH among the first type RedCap UE and a second type RedCap UE supporting the same bandwidth for the PDCCH and the PDSCH, and the first time period may be set for an RAR of the first type RedCap UE excluding an RAR of the second type RedCap UE.

The first type RedCap UE may support a bandwidth of 5MHz or more for the PDCCH and a bandwidth of 5MHz or less for the PDSCH.

The second type RedCap UE may support a bandwidth of 5MHz or more for the PDCCH and the PDSCH.

A bandwidth supported for the PDSCH by the second type RedCap UE may be smaller than a bandwidth supported for the PDCCH by the second type RedCap UE.

A frequency area for the first type RedCap UE may belong to a first bandwidth part (BWP), and the first BWP may be shared between the first type RedCap UE and the second type RedCap UE.

The first time period may be different from a second time period set for the RAR of the second type RedCap UE.

The random access preamble may be a first random access preamble configured for the first type RedCap UE, and the first random access preamble may be different from a second random access preamble configured for the second type RedCap UE.

The PRACH may be transmitted in a first PRACH resource configured for the first type RedCap UE, and the first PRACH resource may be different from a second PRACH resource configured for the second type RedCap UE.

According to another aspect, a computer-readable recording medium recording instructions for performing the above-described method may be provided.

According to another aspect, a UE for performing the above-described method may be provided.

According to another aspect, a device for controlling the UE performing the above-described method may be provided.

According to another aspect, a method of performing a random access procedure with a UE by a BS in a wireless communication system may include receiving a random access preamble from the UE through a PRACH, transmitting DCI scheduling an RAR for the transmission of the random access preamble to the UE through a PDCCH, and transmitting a PDSCH including the RAR based on the DCI. Based on the UE being a first type RedCap UE supporting different bandwidths for the PDCCH and the PDSCH among the first type RedCap UE and a second type RedCap UE supporting the same bandwidth for the PDCCH and the PDSCH, the BS may schedule the RAR for the UE in a first time period set for an RAR of the first type RedCap UE excluding an RAR of the second type RedCap UE.

According to another aspect, a BS for performing the above-described method may be provided.

### ADVANTAGEOUS EFFECTS

According to an embodiment of the present disclosure, signal transmission and reception may be performed more accurately and efficiently in a wireless communication system.

The effects of present disclosure are not limited to what has been particularly described hereinabove, and other effects that the present disclosure could achieve will be more clearly understood from the following detailed description.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates a random access procedure.
FIG. 5 illustrates an example of physical channel mapping.
FIG. 6 shows a flow of a method of transmitting and receiving a signal according to an embodiment.
FIG. 7 illustrates a method of allocating N PDSCH resources for RARs according to an embodiment.
FIG. 8 illustrates PDSCH resource allocation for MSG2 or MSGB within 20 MHz according to an embodiment.
FIG. 9 illustrates PDSCH resource allocation for MSG2 or MSGB outside 20 MHz according to an embodiment.
FIG. 10 illustrates PDSCH resource allocation schemes for MSG2 or MSGB according to an embodiment.
FIG. 11 is a diagram for explaining configuration of a size of an RBG depending on a BWP size.
FIG. 12 is a diagram illustrating a random access procedure according to an embodiment.
FIGS. 13 and 14 illustrate a communication system 1 and wireless devices applied to the present disclosure.
FIG. 15 illustrates discontinuous reception (DRX) operation applicable to the present disclosure.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Datan Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto. LTE refers to technologies after 3GPP TS 36.xxx Release 8. Specifically, LTE technologies after 3GPP TS 36.xxx Release 10 are referred to as LTE-A, and LTE technologies after 3GPP TS 36.xxx Release 13 are referred to as LTE-A pro. 3GPP NR refers to technologies after TS 38.xxx Release 15. LTE/NR may be referred to as 3GPP systems. In this document, "xxx" represents the detail number of a specification. LTE/NR may be collectively referred to as 3GPP systems.

Details of the background, terminology, abbreviations, etc. used herein may be found in documents published before the present disclosure. For example, the present disclosure may be supported by the following documents:

### 3GPP NR

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.287: Application layer support for V2X services; Functional architecture and information flows
- 3GPP TS 23.501: System Architecture for the 5G System
- 3GPP TS 23.502: Procedures for the 5G System
- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

### Technical terms used in this document

- UE: User Equipment
- SSB: Synchronization Signal Block
- MIB: Master Information Block
- RMSI: Remaining Minimum System Information
- FR1: Frequency Range 1. Refers to the frequency range below 6 GHz (eg, 450 MHz to 6000 MHz).
- FR2: Frequency Range 2. Refers to the millimeter wave (mmWave) region above 24 GHz (eg, 24250 MHz to 52600 MHz).
- BW: Bandwidth
- BWP: Bandwidth Part
- RNTI: Radio Network Temporary Identifier
- CRC: Cyclic Redundancy Check
- SIB: System Information Block
- SIB1: SIB1 for NR devices = RMSI (Remaining Minimum System Information). Broadcasts information necessary for cell access of NR UEs.
- CORESET (COntrol REsource SET): Time/frequency resource at which the NR UEs attempt to decode PDCCH candidates
- CORESET#0: CORESET for Type0-PDCCH CSS set for NR devices (configured based on MIB)
- Type0-PDCCH CSS set: a search space set in which an NR UE monitors a set of PDCCH candidates for a DCI format with CRC scrambled by a SI-RNTI
- MO: PDCCH Monitoring Occasion for Type0-PDCCH CSS set
- SIB1-R: (additional) SIB1 for reduced capability NR devices. SIB1-R may be generated as a TB separate from SIB1 and transmitted through a separate PDSCH.
- CORESET#0-R: CORESET#0 for reduced capability NR devices
- Type0-PDCCH-R CSS set: a search space set in which an redcap UE monitors a set of PDCCH candidates for a DCI format with CRC scrambled by a SI-RNTI
- MO-R: PDCCH Monitoring Occasion for Type0-PDCCH CSS set
- Cell defining SSB (CD-SSB): SSB including RMSI scheduling information among NR SSBs
- Non-cell defining SSB (non-CD-SSB): Refers to an SSB that is placed in the NR sync raster, but does not include the RMSI scheduling information of the cell for measurement. However, non-CD-SS may contain information that points to the location of the cell defining SSB.
- SCS: subcarrier spacing
- SI-RNTI: System Information Radio-Network Temporary Identifier
- Camp on: "Camp on" is the UE state in which the UE stays on a cell and is ready to initiate a potential dedicated service or to receive an ongoing broadcast service.
- TB: Transport Block
- RSA (Redcap standalone): Cells that support only Redcap devices or services.
- SIB1(-R)-PDSCH: SIB1(-R) transmitting PDSCH
- SIB1(-R)-DCI: SIB1(-R)-PDSCH scheduling DCI. DCI format 1_0 with CRC scrambled by SI-RNTI.
- SIB1(-R)-PDCCH: SIB1(-R)-DCI transmitting PDCCH
- FDRA: Frequency Domain Resource Allocation
- TDRA: Time Domain Resource Allocation
- RA: Random Access
- MSGA: preamble and payload transmissions of the random access procedure for 2-step RA type.
- MSGB: response to MSGA in the 2-step random access procedure. MSGB may consist of response(s) for contention resolution, fallback indication(s), and backoff indication.
- RO-N: RO(RACH Occasion) for normal UE 4-step RACH and 2-step RACH(if configured)
- RO-N1, RO-N2: If separate RO is configured for normal UE 2-step RACH, classified as RO-N1(4-step), RO-N2(2-step)
- RO-R: RO (RACH Occasion) set separately from RO-N for redcap UE 4-step RACH and 2-step RACH (if configured)
- RO-R1, RO-R2: if a separate RO is configured for redcap UE 2-step RACH, classified as RO-R1 (4-step) and RO-R2 (2-step)
- PG-R: MsgA-Preambles Group for redcap UEs
- RAR: Randoma Access Response
- RAR window: the time window to monitor RA response(s)
- FH: Frequency Hopping
- iBWP: initial BWP
- iBWP-DL(-UL): initial DL(UL) BWP
- iBWP-DL(-UL)-R: (separate) initial DL(UL) BWP for RedCap
- CS: Cyclic shift
- NB: Narrowband

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, proposals and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, proposals and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

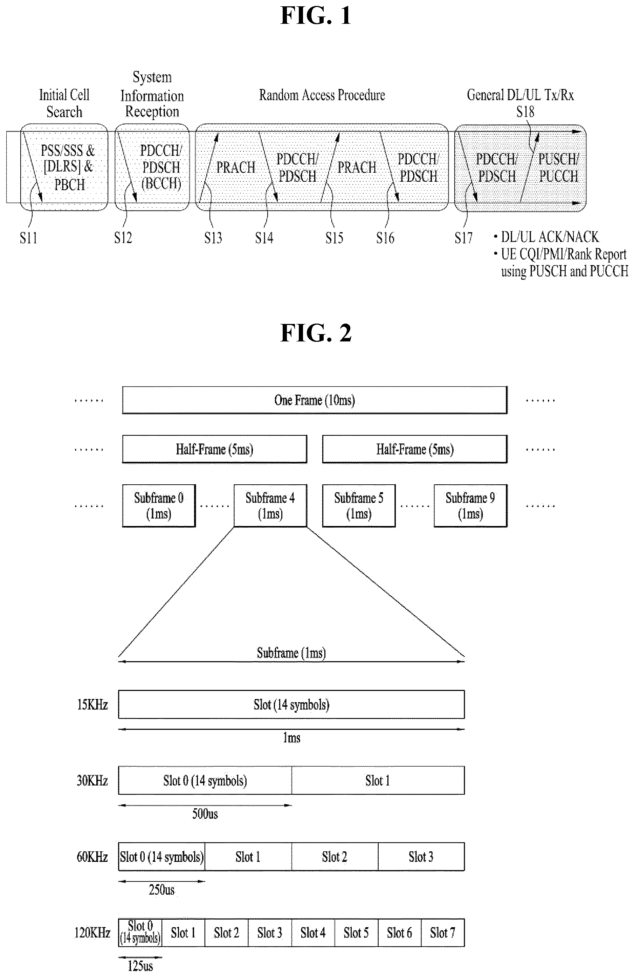

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

The SSB is composed of four consecutive OFDM symbols, each carrying the PSS, the PBCH, the SSS/PBCH, or the PBCH. Each of the PSS and the SSS includes one OFDM symbol by 127 subcarriers, and the PBCH includes three OFDM symbols by 576 subcarriers. The PBCH is encoded/decoded based on Polar codes, and modulation/demodulation is performed thereon according to quadrature phase shift keying (QPSK). The PBCH in the OFDM symbol consists of data resource elements (REs) to which a complex modulation value of the PBCH is mapped, and demodulation reference signal (DMRS) REs to which a DMRS for the PBCH is mapped. Three DMRS REs are configured for each RB in the OFDM symbol, and three datan REs configured between DMRS REs.

The PSS may be used in detecting a cell ID within a cell ID group, and the SSS may be used in detecting a cell ID group. The PBCH may be used in detecting an SSB (time) index and a half-frame. There are 336 cell ID groups, and each cell ID group includes three cell IDs. Thus, there are a total of 1008 cell IDs.

SSBs are periodically transmitted with an SSB periodicity. A default SSB periodicity assumed by the UE in initial cell search is defined as 20 ms. After cell access, the SSB periodicity may be set to one of {5 ms, 10 ms, 20 ms, 40 ms, 80 ms, and 160 ms} by the network (e.g., BS). An SSB burst set may be configured at the beginning of the SSB periodicity. The SSB burst set may be set to a time window of 5 ms (i.e., half-frame), and the SSB may be repeatedly transmitted up to L times within the SS burst set. The maximum number of SSB transmissions L may be given depending carrier frequency bands as follows. One slot includes up to two SSBs.
- For frequency range up to 3 GHz, L = 4
- For frequency range from 3GHz to 6 GHz, L = 8
- For frequency range from 6 GHz to 52.6 GHz, L = 64

The time-domain positions of candidate SSBs in the SS burst set may be defined depending on subcarrier spacings. The time-domain positions of the candidate SSBs are indexed from (SSB indices) 0 to L-1 in temporal order within the SSB burst set (i.e., half-frame).

Multiple SSBs may be transmitted within the frequency span of a carrier. Each SSB may not need to have a unique physical layer cell identifier, but different SSBs may have different physical layer cell identifiers.

The UE may acquire DL synchronization by detecting the SSB. The UE may identify the structure of the SSB burst set based on the detected SSB (time) index, and thus the UE may detect a symbol/slot/half-frame boundary. A frame/half-frame number to which the detected SSB belongs may be identified based on system frame number (SFN) information and half-frame indication information.

Specifically, the UE may obtain a 10-bit SFN for a frame to which a PBCH belongs from the PBCH. Then, the UE may obtain 1-bit half-frame indication information. For example, when the UE detects the PBCH in which the half-frame indication bit is set to 0, the UE may determine that an SSB to which the PBCH belongs is included in the first half-frame of the frame. When the UE detects the PBCH in which the half-frame indication bit is set to 1, the UE may determine that an SSB to which the PBCH belongs is included in the second half-frame of the frame. Finally, the UE may obtain the SSB index of the SSB to which the PBCH belongs based on a DMRS sequence and a PBCH payload carried by the PBCH.

After initial cell search, the UE may acquire more specific system information by receiving a physical downlink control channel (PDCCH) and receiving a physical downlink shared channel (PDSCH) based on information of the PDCCH in step S102.

System information (SI) is divided into a master information block (MIB) and a plurality of system information blocks (SIBs). The SI except for the MIB may be referred to as remaining minimum system information (RMSI). Details thereof will be described in the following.
- The MIB includes information/parameters for monitoring a PDCCH scheduling a PDSCH carrying SIB1 (SystemInformationBlock1), and the MIB is transmitted by the BS over the PBCH of an SSB. For example, the UE may check based on the MIB whether there is a CORESET for a Type0-PDCCH common search space. The Type0-PDCCH common search space is a kind of PDCCH search space, which is used to transmit a PDCCH scheduling an SI message. If the Type0-PDCCH common search space exists, the UE may determine (1) a plurality of contiguous RBs and one or more consecutive symbols included in the CORESET and (ii) a PDCCH occasion (e.g., a time-domain location for PDCCH reception, based on information (e.g., pdcch-ConfigSIB1) in the MIB. If the Type0-PDCCH common search space does not exist, pdcch-ConfigSIB 1 provides information on a frequency location at which the SSB/SIB1 exists and information on a frequency range where there are no SSB/SIB1.
- SIB1 includes information related to availability and scheduling (e.g., transmission periodicity, SI-window size, etc.) of the remaining SIBs (hereinafter referred to as SIBx where x is an integer more than or equal to 2). For example, SIB1 may indicate whether SIBx is periodically broadcast or provided at the request of the UE in an on-demand manner. When SIBx is provided in an on-demand manner, SIB1 may include information necessary for the UE to send an SI request. SIB1 is transmitted over a PDSCH, and a PDCCH scheduling SIB1 is transmitted in the Type0-PDCCH common search space. That is, SIB1 is transmitted over the PDSCH indicated by the PDCCH.
- SIBx is included in the SI message and transmitted on the PDSCH. Each SI message is transmitted within a periodically occurring time window (i.e., SI-window).

The UE may perform a random access procedure (e.g., 4-step RA procedure) to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

Hereinafter, a 2-step random access procedure will be described in brief. In the 2-step random access procedure, S103/S105 may be performed in one step (where the UE performs transmission) (message A), and S104/S106 may be performed in one step (where the BS performs transmission) (message B). Message A (MsgA) may include a preamble and a payload (PUSCH payload), and the preamble and payload may be multiplexed based on time division multiplexing (TDM). In response to MsgA, message B (MsgB) may be transmitted for contention resolution, fallback indication(s), and/or backoff indication. The 2-step random access procedure may be subdivided into a contention-based random access (CBRA) procedure and a contention-free random access (CFRA) procedure. In the CFRA procedure, the BS may provide the UE with information on a preamble that the UE needs to transmit in MsgA and information on PUSCH allocation before the UE transmits MsgA.

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The MR system may support signal transmission/reception in unlicensed bands. According to regional regulations for unlicensed bands, a communication node in an unlicensed band needs to determine whether a channel is used by other communication node(s) before transmitting a signal. Specifically, the communication node may perform carrier sensing (CS) before transmitting the signal so as to check whether the other communication node(s) perform signal transmission. When it is determined that the other communication node(s) perform no signal transmission, it is said that clear channel assessment (CCA) is confirmed. When a CCA threshold is predefined or configured by higher layer signaling (e.g., RRC signaling), the communication node may determine that the channel is busy if the detected channel energy is higher than the CCA threshold. Otherwise, the communication node may determine that the channel is idle. When it is determined that the channel is idle, the communication node may start the signal transmission in a UCell. The sires of processes described above may be referred to as Listen-Before-Talk (LBT) or a channel access procedure (CAP). The LBT and CAP may be interchangeably used in this document.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^u) | N^{slot} _{symb} | N^{frame,u}ₛₗₒₜ | N ^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| N ^{slot}_{symb}: Number of symbols in a slot N ^{frame,u}ₛₗₒₜ: Number of slots in a frame N ^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^u) | N ^{slot}_{symb} | N ^{frame,u}ₛₗₒₜ | N ^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

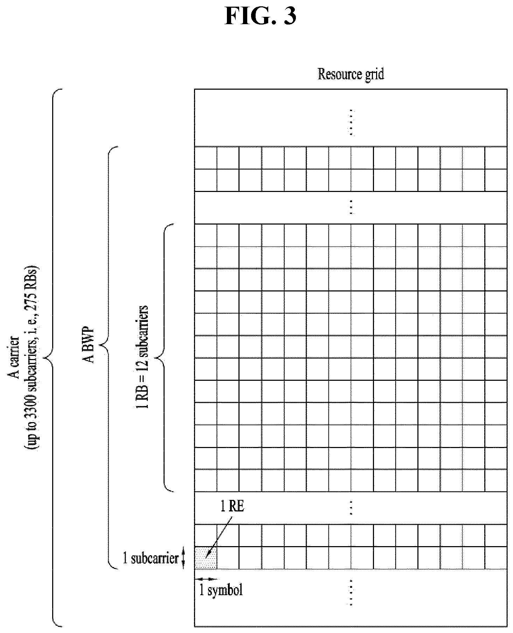

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

### Bandwidth part (BWP)

The NR system may support up to 400 MHz for each carrier. The network may instruct the UE to operate only in a partial bandwidth rather than the whole bandwidth of such a wideband carrier. The partial bandwidth is referred to as a BWP. The BWP refers to a subset of contiguous common RBs defined for a numerology in the BWP of a carrier in the frequency domain, and one numerology (e.g., SCS, CP length, slot/mini-slot duration, etc.) may be configured.

Activation/deactivation of a DL/UL BWP or BWP switching may be performed according to network signaling and/or timers (e.g., L1 signaling corresponding to a physical layer control signal, a MAC control element corresponding to a MAC layer control signal, RRC signaling, etc.). While performing initial access or before setting up an RRC connection, the UE may not receive any DL/UL BWP configurations. A DL/UL BWP that the UE assumes in this situation is referred to as an initial active DL/UL BWP.

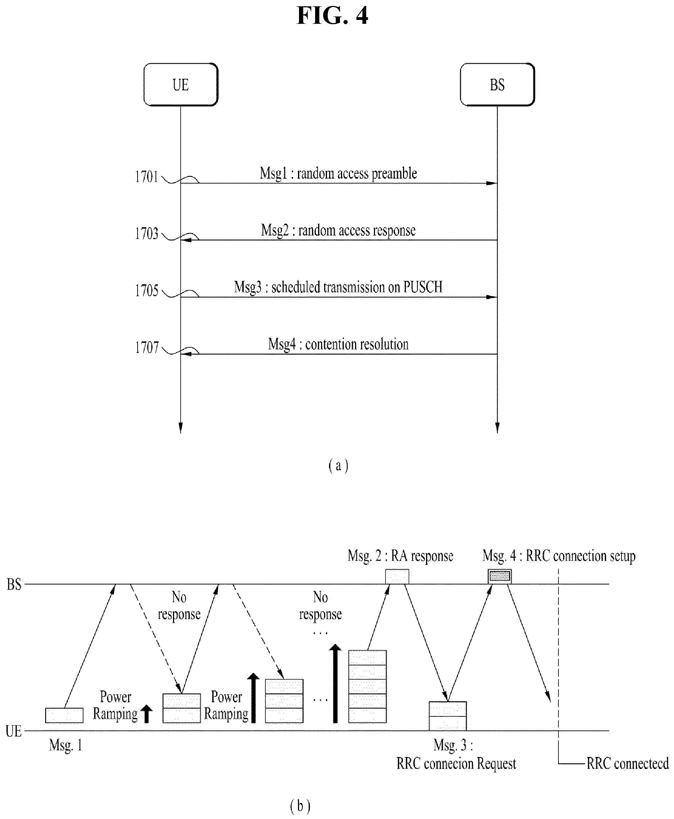

FIG. 4 illustrates an exemplary normal random access procedure. Specifically, FIG. 4 shows a contention-based random access procedure of the UE, which is performed in four steps.

First, the UE may transmit message 1 (Msg1) including a random access preamble on a PRACH (see 1701 of FIG. 4(a)).

Random access preamble sequences with different lengths may be supported. A long sequence length of 839 may be applied to SCSs of 1.25 and 5 kHz, and a short sequence length of 139 may be applied to SCSs of 15, 30, 60, and 120 kHz.

Multiple preamble formats may be defined by one or more RACH OFDM symbols and different CPs (and/or guard times). A RACH configuration for a cell may be included in SI about the cell and provided to the UE. The RACH configuration may include information on the SCS of the PRACH, available preambles, preamble formats, and so on. The RACH configuration may include information about association between SSBs and RACH (time-frequency) resources. The UE transmits a random access preamble on an RACH time-frequency resource associated with a detected or selected SSB.

The threshold of an SSB for RACH resource association may be configured by the network, and an RACH preamble may be transmitted or retransmitted based on an SSB where reference signal received power (RSRP), which is measured based on the SSB, satisfies the threshold. For example, the UE may select one SSB from among SSBs that satisfy the threshold and transmit or retransmit the RACH preamble based on an RACH resource associated with the selected SSB.

Upon receiving the random access preamble from the UE, the BS may transmit message 2 (Msg2) corresponding to a random access response (RAR) message to the UE (see 1703 of FIG. 4(a)). A PDCCH scheduling a PDSCH carrying the RAR may be CRC masked with a random access (RA) radio network temporary identifier (RNTI) (RA-RNTI) and then transmitted. Upon detecting the PDCCH masked by the RA-RNTI, the UE may obtain the RAR from the PDSCH scheduled by DCI carried by the PDCCH. The UE may check whether the RAR includes RAR information in response to the preamble transmitted by the UE, i.e., Msg1. The presence or absence of the RAR information in response to Msg1 transmitted by the UE may be determined depending on whether there is a random access preamble ID for the preamble transmitted by the UE. If there is no response to Msg1, the UE may retransmit the RACH preamble within a predetermined number of times while performing power ramping. The UE may calculate PRACH transmit power for retransmitting the preamble based on the most recent path loss and power ramping counter.

The RAR information transmitted on the PDSCH may include timing advance (TA) information for UL synchronization, an initial UL grant, and a temporary cell-RNTI (C-RNTI). The TA information may be used to control a UL signal transmission timing. The UE may transmit a UL signal over a UL shared channel as message 3 (Msg3) of the random access procedure based on the RAR information (see 1705 of FIG. 4(a)). Msg3 may include an RRC connection request and a UE identifier. In response to Msg3, the network may transmit message 4 (Msg4), which may be treated as a contention resolution message on DL (see 1707 of FIG. 4(a)). Upon receiving Msg4, the UE may enter the RRC_CONNECTED state.

On the other hand, a contention-free random access procedure may be performed when the UE is handed over to another cell or BS or when it is requested by the BS. In the contention-free random access procedure, a preamble to be used by the UE (hereinafter referred to as a dedicated random access preamble) is allocated by the BS. Information on the dedicated random access preamble may be included in an RRC message (e.g., handover command) or provided to the UE through a PDCCH order. When the random access procedure is initiated, the UE may transmit the dedicated random access preamble to the BS. When the UE receives an RAR from the BS, the random access procedure is completed.

As described above, a UL grant in the RAR may schedule PUSCH transmission to the UE. A PUSCH carrying initial UL transmission based on the UL grant in the RAR is referred to as an Msg3 PUSCH. The content of an RAR UL grant may start at the MSB and end at the LSB, and the content may be given as shown in Table 3.

**[Table 3]**

| **RAR UL grant field** | **Number of bits** |
|---|---|
| Frequency hopping flag | 1 |
| Msg3 PUSCH frequency resource allocation | 12 |
| Msg3 PUCH time resource allocation | 4 |
| Modulation and coding scheme (MCS) | 4 |
| Transmit power control (TPC) for Msg3 PUSCH | 3 |
| CSI request | 1 |

In a contention-free random access (CFRA) procedure, the CSI request field in the RAR UL grant indicates whether the UE includes aperiodic CSI reporting in the corresponding PUSCH transmission. a subcarrier spacing for Msg3 PUSCH transmission is provided by the RRC parameter. The UE may transmit PRACH and Msg3 PUSCH on the same uplink carrier in the same service providing cell. A UL BWP for Msg3 PUSCH transmission is indicated by SystemInformationBlock1 (SIB1).

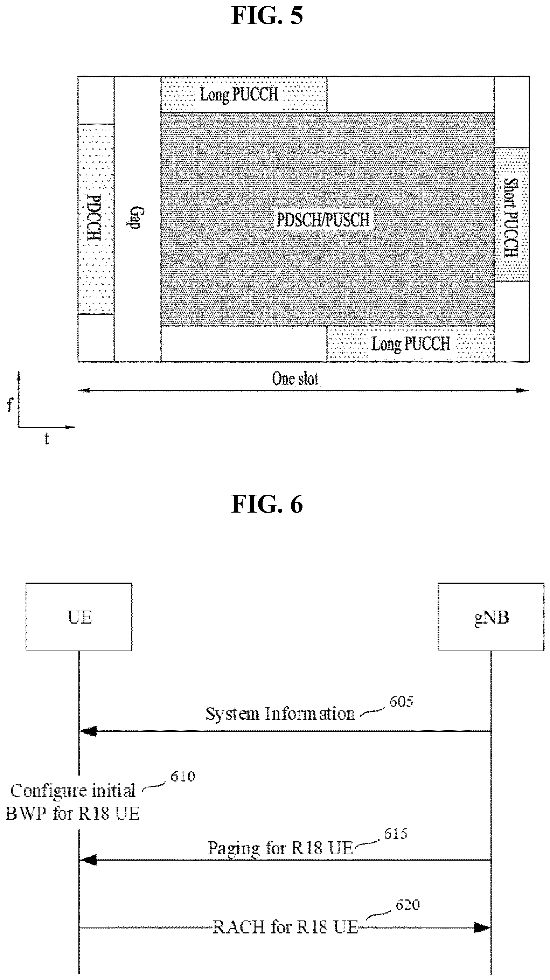

FIG. 5 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.
- controlResourceSetId: A CORESET related to an SS.
- monitoringSlotPeriodicity AndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

* An occasion (e.g., time/frequency resources) in which the UE is to monitor PDCCH candidates is defined as a PDCCH (monitoring) occasion. One or more PDCCH (monitoring) occasions may be configured in a slot.

Table 4 shows the characteristics of each SS.

**[Table 4]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 5 shows DCI formats transmitted on the PDCCH.

**[Table 5]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.
- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

### Narrower BWP for RACH transmission and reception

Recently, in addition to the 5G main use cases (mMTC, eMBB, and URLLC), importance/interest in a region of a use case across mMTC and eMBB, or mMTC and URLLC has increased. These use cases may include connected industries, smart cities, wearables, and the like. To more efficiently support the above use cases in terms of UE cost/complexity, power consumption, and the like in a wireless communication system, a new type of UE differentiated from a conventional NR UE has been introduced. This new type of UE may be referred to as an Reduced Capability NR UE (hereinafter referred to as an RedCap UE/terminal, or RedCap), and to distinguish the new type of UE from the conventional NR UE, the conventional NR UE may be referred to as a non-RedCap UE/terminal, or non-RedCap. A RedCap UE is cheaper than a non-RedCap UE and has low power consumption, and in detail, may have all or some of the following features.

### A. Features related to complexity reduction:

- Reduced maximum UE bandwidth
- Reduced number of UE RX/TX branches/antennas
- Half-Duplex-FDD
- Relaxed UE processing time
- Relaxed UE processing capability

### B. Features related to power saving:

- Extended DRX for RRC inactive and/or idle
- RRM relaxation for stationary devices

Target use cases of an Redcap UE having the above features may include the following:

### 1) Connected industries

- Sensors and actuators connected to a 5G network and a core
- massive industrial wireless sensor network (IWSN)
- Relatively low-cost service requiring small device form factor with several years of battery lifetime in addition to URLLC service with very high requirements
- Requirements for these services are higher than low power wide area (LPWA, i.e., LTE-M/NB-IOT) but lower than URLCC and eMBB
- Pressure sensor, humidity sensor, thermometer, motion sensor, accelerometer, actuator, and the like

### 2) Smart city

- Data collection and processing to more efficiently monitor and control city resources and provide service
- Essential surveillance camera for factories and industries as well as smart cities

### 3) Wearables

- Smart watch, ring, eHealth-related device, medical monitoring device, and the like
- Small device and the like

A RedCap UE may have lower transmission and reception performance compared to a non-RedCap UE. A main cause is a decrease in frequency diversity performance due to a decrease in UE bandwidth. As a supported UE bandwidth decreases, a decrease width in performance increases.

Considering major use cases of RedCap, such as wearables and massive wireless sensors, traffic congestion is expected because massive connection needs to be supported through a narrow bandwidth.

A method for resolving the above problems, that is, supporting UE frequency hopping (hereinafter, FH) and supporting traffic offloading (hereinafter TO) is proposed.

In this specification, '()' may be interpreted as both excluding the contents in () and including the contents in parentheses.

In this specification, '/' may mean including all contents separated by / (and) or including only some of the contents separated by / (or).

### Multiple RedCap UE types and BWP methods

In this specification, a plurality of different RedCap UE types are supported as follows. In particular, it supports at least two types.
(1) Rel.17 RedCap UE: Rel. 17 R-UE supporting BWP of 20 MHz
(2) Rel.18 RedCap UE: Rel.18 R-UE supporting 5MHz BWP (or sub-BWP of 5 MHz or BW location of 5MHz)
   1) Option BW1: Both RF and baseband (BB) bandwidths of a UE support 5 MHz for UL/DL.
   2) Option BW2: The UE supports a BB bandwidth of 5 MHz and an RF bandwidth of 20 MHz for all UL/DL signal/channels.
   3) Option BW3: Only a BB bandwidth of 5 MHz is supported for a PDSCH (unicast/broadcast PDSCH) and a PUSCH, and an RF bandwidth of 20 MHz for UL/DL is supported. However, up to 20 MHz of UE RF+BB bandwidths are supported for different physical channels and signals.

In the specification, Rel.18 PDSCH or DCI may refer to a PDSCH or DCI for an Rel. 18 R-UE. A Rel-17 PDSCH, a legacy PDSCH, or a pre-Rel.18 PDSCH may refer to a PDSCH for a non-RedCap UE irrespective of an Rel. 17 R-UE or release, and Rel-17 DCI, legacy DCI, or pre-Rel. 18 DCI may refer to DCI for the non-RedCap UE irrespective of the Rel. 17 R-UE or release.

In the specification, a (initial) BWP for the Rel. 18 R-UE may be replaced with a sub-BWP or a BW location, and may have a size 5 MHz or less.

### Method of dividing an initial DL BWP for general UEs or an R17-initial DL BWP for R17 RedCap UEs into N 5-MHz PDSCHs for Rel. 18 UEs, for RARs.

When on-demand SI is configured, a BS may configure a dedicated RACH resource for an on-demand SI request. Alternatively, it may configure a dedicated RACH resource for UE identification during initial access. In this way, for the on-demand SI request or for UE identification during initial access, the BS may separately allocate RACH resources for R17 R-UEs, RACH resources for R18 R-UEs, and RACH resources for general UEs. In addition, for R18 R-UEs, the BS may separately allocate RACH resources for option BW1 UEs, RACH resources for option BW2 UEs, and RACH resources for option BW3 UEs. These different RACH resources may be allocated separately by legacy SIB1 and R-SIB1. In this case, an R18 R-UE selects a PRACH resource corresponding to its UE type and transmits RACH MSG1 or MSGA.

Subsequently, the UE receives an RAR MAC CE or a MAC CE for MSGB in response to RACH MSGA. To transmit MSG2 or MSGB for the R18 R-UE, the BS may divide the initial BWP for general UEs or the R17-initial BWP for R17 RedCap UEs into N SMHz's and allocate PDSCHs. For example, when the R18 R-UE is capable of receiving a PDSCH transmission in up to 5MHz, the BS may divide the 20-MHz initial BWP into N 5 MHz's and transmit Rel. 18 PDSCH(s) for MSG2 or MSGB in one or more specific SMHz's of the 20-MHz initial BWP, as in Method 1 or Method 2 below.

For MSG2 or MSGB transmission of the R18 R-UE, the CRC of DCI transmitted within an RA window may be scrambled with an RA-RNTI or an MSGB-RNTI, for transmission, and the DCI may schedule one or more PDSCHs. Each of these PDSCH(s) may be mapped to a specific PRACH partition (i.e., specific PRACH sub-group). That is, different PDSCHs scheduled by a single DCI may deliver different RAR MAC CEs for different PRACH partitions (i.e. specific PRACH sub-groups) as follows:
R18 PDSCH1: RAR MAC CE1 for PRACH partition 1 (i.e. PRACH sub-group1)
R18 PDSCH2: RAR MAC CE2 for PRACH partition 2 (i.e. PRACH sub-group2)
   ...
R18 PDSCH _N: RAR MAC CE_N for PRACH partition N (i.e. PRACH sub-group_N)

The R18 PDSCHs deliver RAR MAC CEs (or MAC CEs for MSGB) for R18 R-UEs. In this case, N may be determined according to a configuration of the BS. The BS may configure PRACH partitions or PRACH sub-groups for the R18 R-UEs through system information (e.g., SIB1 or R-SIB1), and configure an R18 PDSCH frequency resource allocation for them.

The PRACH partitions or PRACH sub-groups may include specific RACH occasion(s) and/or specific PRACH preamble ID(s). Different PRACH partitions or PRACH sub-groups may include up to N combinations of different specific RACH occasion(s) and/or specific PRACH preamble ID(s). In this case, the PRACH partitions or PRACH sub-groups include only dedicated PRACH resources for the R18 R-UEs. Alternatively, they may include PRACH resources that are also available to the R17 R-UEs or the general UEs.

Different R18 PDSCHs carry different RAR MAC CEs (or MAC CEs for MSGB). For example, R18 PDSCH1 carries RAR MAC CE1 (or MAC CE1 for MSGB) as a response for UE(s) that transmitted a PRACH preamble in PRACH partition 1 (i.e. PRACH sub-group1), R18 PDSCH2 carries RAR MAC CE2 (or MAC CE2 for MSGB) as a response for UE(s) that transmitted a PRACH preamble in PRACH partition 2 (i.e. PRACH sub-group2), and R18 PDSCH_N carries RAR MAC CE_N (or MAC CE_N for MSGB) as a response for UE(s) that transmitted a PRACH preamble to PRACH partition_N (i.e. PRACH sub-group_N).

In the present disclosure, a PRACH sub-group to which a PRACH transmission resource transmitted by the UE belongs may be mapped to a specific DL (sub-)BWP or a specific (predefined) BW location. Accordingly, when a UE performing a contention-based RACH transmission transmits MSG1 or MSGA in a PRACH resource of a specific PRACH sub-group, the UE may expect that a PDCCH and/or PDSCH for MSG2 or MSGB will be transmitted in a (sub-)BWP or (predefined) BW location mapped to the specific PRACH sub-group. When a contention-based RACH transmission is performed, the BS may allocate both a UE-specific PRACH resource and a (sub-)BWP or (predefined) BW location in which a response is to be received. For example, the BS may indicate the index of the (sub-)BWP or (predefined) BW location in which the response is to be received by DCI or an RRC message, which allocates the UE-specific PRACH resource.

Accordingly, the UE performing the contention-based RACH transmission may monitor a PDCCH for MSG2 or MSGB and receive a PDSCH scheduled by the PDCCH, in the (sub-)BWP or (predefined) BW location to which the PRACH sub-group of MSG1 or MSGA is mapped. Alternatively, the UE of option BW3 may perform PDCCH monitoring in the 20-MHz initial DL BWP, and receive the PDSCH for the PDCCH through a 5-MHz region in the (sub-)BWP or (predefined) BW location to which the PRACH sub-group is mapped.

Meanwhile, the UE performing the contention-based RACH transmission may monitor the PDCCH for MSG2 or MSGB and receive a PDSCH scheduled by the PDCCH, in the (sub-)BWP or (predefined) BW location indicated by the DCI or RRC message that allocates the UE-specific PRACH resource. Alternatively, the UE of option BW3 performs PDCCH monitoring in the 20-MHz initial DL BWP, and receive the PDSCH for the PDCCH in a 5-MHz region in the (sub-)BWP or (predefined) BW location indicated by the DCI or RRC message that allocates the UE-specific PRACH resource. When the DCI or RRC message that allocates the UE-specific PRACH resources does not specify a separate (sub-)BWP or (predefined) BW location, the UE may receive the PDCCH and/or the PDSCH in a 5-MHz region of a (sub-)BWP or (predefined) BW location configured by the BS through system information or a UE-specific message.

The following methods may be considered for MSG2 or MSGB transmission and reception.
(1) Method 1: The UE transmits a 20MHz-based PRACH preamble in a PRACH partition mapped to a DL sub-BWP (5MHz) in the existing 20-MHz (initial) UL BWP.
   1) Method 1-1: The index of a DL (sub-)BWP (or a (predefined) BW location index) is considered in an equation for an RA-RNTI with which the CRC of DCI is scrambled.

In this method, the DCI schedules a PDSCH for MSG2 or MSGB for a specific DL (sub-)BWP (i.e. specific BW location) or a specific PRACH partition (i.e. PRACH sub-group) for the specific DL (sub-)BWP.

For example, the RA-RNTI may be calculated in the manner as described in Table 6 below.

**[Table 6]**

| |
|---|
| The RA-RNTI associated with the PRACH occasion in which the Random Access Preamble is transmitted, is computed as: |
| Alt 1: |
| RA-RNTI = 1 + s_id + 14 × t_id + 14 × 80 × f_id + 14 × 80 × 8 × ul_carrier_id + 14 × 80 × 8 × N x DL (sub-)BWP index |
| Alt 2: |
| RA-RNTI = 1 + s_id + 14 × t_id + 14 × 80 × f_id + 14 × 80 × 8 × DL (sub-)BWP index + 14 × 80 × 8 × M x ul_carrier_id |
| where s_id is the index of the first OFDM symbol of the PRACH occasion (0 ≤ s_id < 14), t_id is the index of the first slot of the PRACH occasion in a system frame (0 ≤ t_id < 80), where the subcarrier spacing to determine t_id is based on the value of µ specified in clause 5.3.2 in TS 38.211 [8] for µ = {0, 1, 2, 3}, and for µ = {5, 6}, t_id is the index of the 120 kHz slot in a system frame that contains the PRACH occasion (0 ≤ t_id < 80), f_id is the index of the PRACH occasion in the frequency domain (0 ≤ f_id < 8), and ul_carrier_id is the UL carrier used for Random Access Preamble transmission (0 for NUL carrier, and 1 for SUL carrier). |
| N: the configured or maximum number of ul_carrier_id |
| M: the configured or maximum number of DL (sub-)BWP index |

2) Method 1-2: An RA-RNTI is calculated in a conventional manner, and a PDSCH is transmitted by applying FDRA/TDRA as in Method 3. 3) Method 1-3: A PDSCH is transmitted by dividing an RA window according to BWP or PRACH partitions.

For example, when the UE transmits MSG1 or MSGA in a specific PRACH partition (i.e. PRACH sub-group), the UE monitors a PDCCH in an RA window mapped to the specific PRACH partition (i.e. PRACH sub-group) or in an RA window mapped to a specific DL (sub-)BWP (i.e. specific BW location). The specific DL (sub-)BWP (i.e. specific BW location) may be mapped to the specific PRACH partition (i.e. PRACH sub-group).

A PDSCH scheduled by the PDCCH received in the RA window may be transmitted and received in the specific DL (sub-)BWP (i.e. specific BW location), and a MSG2 or MSGB MAC CE transmitted through the PDSCH may include a response for the specific PRACH partition (i.e. PRACH sub-group).

4) Method 1-4: DCI may indicate a specific DL sub-BWP (i.e. BW location) by an index or a bitmap.

Examples of the index or bitmap are given as follows.
- Alt 1: The index indicates a specific sub-BWP (e.g. index = sub-BWP#2)
- Alt 2: A specific bit position in the bitmap is mapped to a specific sub-BWP. One or more sub-BWPs may be indicated by the bitmap. For example, when bitmap = 1010, the DCI indicates sub-BWPs #1 and #3. In this case, a plurality of PDSCHs (i.e. a PDSCH in sub-BWP#1 and a PDSCH in sub-BWP#3) scheduled by the DCI are transmitted in FDM or TDM.
   a. Method 1-4A: When the UE transmits MSG1 or MSGA in a specific PRACH partition (i.e. PRACH sub-group), the UE may receive a PDSCH in a sub-BWP (i.e. BW location) mapped to the specific PRACH partition (i.e. PRACH sub-group). Specific DL (sub-)BWPs (i.e. specific BW locations) may be mapped to specific PRACH partitions (i.e. PRACH sub-groups). When DCI for MSG2 or MSGB indicates a specific DL (sub-)BWP (i.e. specific BW location), the UE receives the PDSCH in the specific DL (sub-)BWP (i.e. specific BW location). Otherwise, the UE does not receive the PDSCH.
   b. Method 1-4B: When the UE transmits MSG1 or MSGA in a specific PRACH partition (i.e. PRACH sub-group), the UE monitors a PDCCH in a sub-BWP (i.e. BW location) mapped to the specific PRACH partition (i.e. PRACH sub-group). The UE may then receive a PDSCH for MSG2 or MSGB in a specific DL sub-BWP (i.e. BW location) indicated by received DCI.
   c. Method 1-4C: The UE monitors a PDCCH after transmitting a PRACH. The UE may then receive a PDSCH for MSG2 or MSGB in a specific DL sub-BWP (i.e. BW location) indicated by received DCI.

(2) Method 2: The UE divides the existing 20-MHz (initial) UL BWP into N UL sub-BWPs (e.g. 5-MHz UL BW locations) and transmits a PRACH preamble in a 5MHz-based PRACH partition mapped to a UL sub-BWP.

In the case of the contention-based RACH, the UE selects one of the N UL sub-BWPs according to its UE type (e.g. Option BW1, BW2 or BW3 UE), UE capability (e.g. 100-MHz BW, 20-MHz BW or 5-MHz BW UE), Release (Pre-R17 UE or R17 R-UE or R18 R-UE), its UE ID (e.g., s-TMSI, resume ID, or C-RNTI), or a specific RNTI of the UE, and transmit a PRACH preamble in the selected UL sub-BWP.

In the case of the contention-based RACH or the contention-free RACH, the UE may transmit a PRACH preamble in a UL sub-BWP (and/or DL sub-BWP) configured by system information, a UE-specific RRC message, or DCI from the BS. Particularly, in the case of the contention-free RACH, DCI or an RRC message that allocates a UE-specific PRACH resource may include an index or bitmap indicating a specific UL sub-BWP (and/or DL sub-BWP). In this case, the UE may transmit the PRACH preamble in the configured/indicated UL sub-BWP. (When a DL sub-BWP is configured/indicated, a PDCCH and/or PDSCH for MSG2 or MSGB may be received in the configured/indicated DL sub-BWP.)
1) Method 2-1: In the equation for an RA-RNTI with which the CRC of DCI is scrambled, an RA-RANTI value is calculated by considering a UL sub-BWP.

In this method, the UL sub-BWP considered in the RA-RNTI equation is mapped to the PRACH partition (i.e. PRACH sub-group) transmitted by the UE.

For example, the RA-RNTI may be calculated in the manner described in Table 7 below.

**[Table 7]**

| |
|---|
| The RA-RNTI associated with the PRACH occasion in which the Random Access Preamble is transmitted, is computed as: |
| Alt 1: |
| RA-RNTI = 1 + s_id + 14 × t_id + 14 × 80 × f_id + 14 × 80 × 8 × ul_carrier_id + 14 × 80 × 8 × N x UL (sub-)BWP index |
| Alt 2: |
| RA-RNTI = 1 + s_id + 14 × t_id + 14 × 80 × f_id + 14 × 80 × 8 × UL (sub-)BWP index + 14 × 80 × 8 × M x ul_carrier_id |
| where s_id is the index of the first OFDM symbol of the PRACH occasion (0 ≤ s_id < 14), t_id is the index of the first slot of the PRACH occasion in a system frame (0 ≤ t_id < 80), where the subcarrier spacing to determine t_id is based on the value of µ specified in clause 5.3.2 in TS 38.211 [8] for µ = {0, 1, 2, 3}, and for µ = {5, 6}, t_id is the index of the 120 kHz slot in a system frame that contains the PRACH occasion (0 ≤ t_id < 80), f_id is the index of the PRACH occasion in the frequency domain (0 ≤ f_id < 8), and ul_carrier_id is the UL carrier used for Random Access Preamble transmission (0 for NUL carrier, and 1 for SUL carrier). |
| N: the configured or maximum number of ul_carrier_id |
| M: the configured or maximum number of UL (sub-)BWP index |
| A UL (sub-)BWP index may be replaced with a PRACH sub-group index. |

2) Method 2-2: An RA-RNTI is calculated in the conventional manner, and a PDSCH is transmitted by applying FDRA/TDRA as in Method 3.
3) Method 2-3: A PDSCH is transmitted by dividing an RA window according to UL sub-BWPs or PRACH partitions.

For example, when the UE transmitted MSG1 or MSGA in a specific UL sub-BWP (i.e. specific UL BW location) or a specific PRACH partition (i.e. PRACH sub-group), the UE monitors a PDCCH in an RA window mapped to the specific UL sub-BWP or specific PRACH partition (i.e. PRACH sub-group).

A PDSCH scheduled by the PDCCH received in the RA window delivers an MSG2 or MSGB MAC CE, and the transmitted MSG2 or MSGB MAC CE may include a response to MSG1 or MSGA transmitted in the specific UL sub-BWP (i.e. specific UL BW location) or the specific PRACH partition (i.e. PRACH sub-group).

4) Method 2-4: DCI may indicate a specific DL sub-BWP (i.e. BW location) by an index or a bitmap.

Examples of the index or bitmap are as follows.
- Alt 1: The index indicates a specific sub-BWP (e.g. index = sub-BWP#2)
- Alt 2: A specific bit position of the bitmap is mapped to a specific sub-BWP. One or more sub-BWPs may be indicated by the bitmap. For example, when bitmap = 1010, the DCI indicates sub-BWPs #1 and #3. In this case, a plurality of PDSCHs scheduled by the DCI (i.e., a PDSCH in sub-BWP#1 and a PDSCH in sub-BWP#3) are transmitted in FDM or TDM.
   a. Method 2-4A: When the UE transmitted MSG1 or MSGA in a specific UL sub-BWP (i.e. specific UL BW location) or a specific PRACH partition (i.e. a PRACH sub-group), the UE may receive a PDSCH in a DL sub-BWP (i.e. DL BW location) mapped to the specific UL sub-BWP (i.e. specific UL BW location) or the specific PRACH partition (i.e. PRACH sub-group). The specific DL (sub-)BWP (i.e. specific BW location) may be mapped to the specific UL sub-BWP (i.e. specific UL BW location) or the specific PRACH partition (i.e. PRACH sub-group). When received DCI for MSG2 or MSGB indicates the specific DL (sub-)BWP (i.e. specific BW location), the UE receives the PDSCH in the specific DL (sub-)BWP (i.e. specific BW location). Otherwise, the UE does not receive the PDSCH.
   b. Method 2-4B: When the UE transmitted MSG1 or MSGA in a specific UL sub-BWP (i.e. specific UL BW location) or a specific PRACH partition (i.e. PRACH sub-group), the UE monitors a PDCCH in a DL sub-BWP (i.e. BW location) mapped to the specific UL sub-BWP (i.e. specific UL BW location) or the specific PRACH partition (i.e. PRACH sub-group). The UE may then receive a PDSCH for MSG2 or MSGB in a specific DL sub-BWP (i.e. BW location) indicated by received DCI.
   c. Method 2-4C: The UE monitors a PDCCH after transmitting a PRACH. The UE may then receive a PDSCH for MSG2 or MSGB in a specific DL sub-BWP (i.e. BW location) indicated by received DCI.

A specific UL sub-BWP (i.e. specific UL BW location) carrying the PDCCH monitored by the R18 R-UE may be configured by system information or an RRC message such as a UE-specific message.

5) Method 2-5: A UL sub-BWP (i.e. a specific UL BW location) and a DL sub-BWP (i.e. a specific DL BW location) are always mapped.

The UE that transmits MSG1 or MSGA in the specific UL sub-BWP (i.e. specific UL BW location) receives a PDCCH or PDSCH for MSG2 or MSGB in the DL sub-BWP (i.e. DL BW location) mapped to the specific UL sub-BWP.

When the PDCCH for MSG2 or MSGB is received in the DL sub-BWP (i.e. DL BW location) mapped to the specific UL sub-BWP, the PDSCH may be received in one of the other methods described above. For example, the PDSCH for MSG2 or MSGB may be received in a DL sub-BWP (i.e. DL BW location) indicated by the PDCCH.

The BS may inform UE(s) of a mapping relationship between specific UL sub-BWPs and specific DL sub-BWPs by system information or an RRC message such as a UE-specific message. The UL sub-BWPs and the DL sub-BWPs may be mapped 1:1, 1:N, or N:1.

FIG. 6 illustrates a signal flow for a signal transmission and reception method according to an embodiment. Referring to FIG. 6, a UE may receive system information (605) and configure an RACH (610). The UE may transmit a PRACH (620), receive an RAR in response to the PRACH (625), and transmit an MSG3 PUSCH (630).

In a 4-step RACH, the UE may transmit an MSG3 PUSCH according to MSG2 reception. In a 2-step RACH, the UE transmits an MSGA PUSCH after transmitting an MSGA PRACH. An R18 R-UE may indicate that it is an R18 R-UE by a MAC PDU (sub-)header of the MSG3 PUSCH or MSGA PUSCH, or may indicate option BW1, BW2, or BW3 according to its UE type. For example, a specific value of the LCID field in the (sub-)header may indicate that it is an R18 R-UE, or may indicate option BW1, BW2, or BW3.

### Method 1: One DCI schedules multiple PDSCH transmissions in FDM within 20-MHz DL BWP for multiple RARs

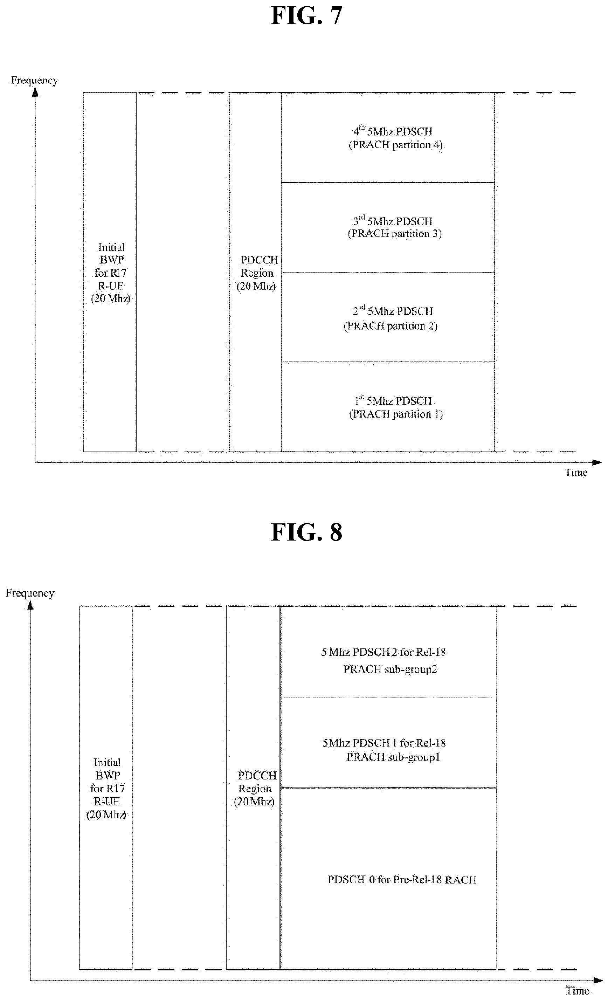

FIG. 7 illustrates an exemplary method of allocating N PDSCH resources for RARs according to an embodiment.

For example, when there is separate search spaces/CORESETs or separate initial 5-MHz BWPs for Rel. 18 UEs, the BS may divide a 20-MHz BWP into four or more/fewer 5-MHz sub-BWPs or 5-MHz BW locations. In this case, the entire set of sub-BWPs or BW locations may be configured beyond the initial 20-MHz BWP. For example, when four 5-MHz BW locations are allocated with a 15-kHz SCS, they may be allocated beyond 20MHz. This method may be applied to PDSCH transmissions for RAR transmissions.

For example, in FIG. 7, for an MSG2 or MSGB transmission, one DCI within 20MHz is transmitted with a CRC scrambled with an RA-RNTI or MSGB-RNTI, and a plurality of PDSCHs scheduled by the DCI deliver different RAR MAC CEs or MAC CEs for MSGB for different PRACH partitions (or different PRACH sub-groups) as described above.

As illustrated in FIG. 7, for Rel. 18 UEs performing PRACH transmissions using Rel. 18 PRACH partitions (i.e., PRACH sub-groups), multiple PDSCH transmissions in FDM may be divided into individual PRACH sub-groups. In this case, the same time domain resource allocation (TDRA) may be applied to all FDMed PDSCHs scheduled by the same DCI. A PDCCH carrying the DCI may be transmitted within 20MHz for a UE of option BW3. The PDCCH carrying the DCI may be transmitted within 5MHz for a UE of option BW1 or BW2.

When frequency hopping is configured for RACH MSG2 or MSGB, a PDCCH within 5MHz for a UE of BW1 may schedule a PDSCH within 5MHz. The 5-MHz PDCCH and the 5-MHz PDSCH may be allocated differently in the frequency domain, and may or may not overlap in the frequency domain. Since the UE may not be able to decode both the 5-MHz PDCCH and the 5-MHz PDSCH in the same slot, the 5-MHz PDCCH may schedule the 5-MHz PDSCH in the next (sub)slot (i.e., by cross-slot scheduling). For example, the 5-MHz PDCCH may be transmitted in a first slot, and the 5-MHz PDSCH scheduled by the 5-MHz PDCCH may be transmitted in a second slot after the first slot. There may be zero, one, or more slots between the first slot and the second slot.

In FIG. 7, FDMed PDSCHs are scheduled in the same slot. Alternatively, the FDMed PDSCHs may be scheduled in different slots. For example, a PDSCH of 5 MHz for sub-group1 may be scheduled in a first slot by a PDCCH in the first slot, a PDSCH of 5 MHz for sub-group 2 may be scheduled in a second slot by the PDCCH in the first slot, a PDSCH of 5 MHz for sub-group 3 may be scheduled in a third slot by the PDCCH in the first slot, and a PDSCH of 5 MHz for sub-group 4 may be scheduled in a third or fourth slot by the PDCCH in the first slot. The same or different multiple transmissions of PDSCH of 5 MHz in 5 MHz may be scheduled by the same DCI or different DCIs within 20 MHz. A PDSCH of 5 MHz may be scheduled entirely or partially outside of 20 MHz of a PDCCH or within 20 MHz of a PDCCH. The same TDRA may be applied to multiple transmissions of a PDSCH of 5 MHz in the same or different slots.

In the TDRA methods, a value K0 corresponding to a difference between DCI transmission and PDSCH transmission may be configured as an RRC message or as a fixed value K0. Alternatively, DCI may indicate the value K0. The K0 value may be separately configured or indicated for each BW option. For example, an RRC message or DCI sets/instructs a value K0 for each option, and at this time, a UE of the BW2 option may set/instruct a smaller value K0 than a UE of the BW1 option. The K0 value may configure a time gap between DCI and PDSCH as a slot level difference or a symbol level difference.

In the case of an Rel.18 UE, a sub BWP or BW location in an (initial) BWP for frequency domain resource allocation (FDRA) may be determined as follows:

### (1) Opt A: A 5-MHz location for a PDSCH is configured by a Rel.18 rule or an RRC message for each subgroup (e.g. based on a PRACH partition).

A Rel.18 UE may be configured with a predefined BW location to receive a PDSCH within 5MHz. For example, in FIG. 7, a specific UE performing a PRACH transmission using PRACH subgroup 3 may be configured with a PDSCH of subgroup 3 scheduled within a third 5-MHz location determined according to the predefined rule. The predefined rule may be based on mapping between PRACH subgroups and predefined BW locations that may be configured by system information and/or UE-dedicated signaling. The predefined BW location may be SMHz, more than SMHz, or less than 5MHz in width, and may be configured as a DL (sub)BWP for the Rel.18 UE. The UE may also monitor a PDCCH within the predefined 5-MHz location, and the PDCCH schedules a PDSCH within a predefined BW location. The predefined BW location of the PDCCH may be the same as or different from the predefined BW location of the PDSCH scheduled by the PDCCH.

The predefined BW location may be configured as a sub BWP of the UE or an (initial) BWP of the UE. It may be configured or reconfigured by system information or UE-dedicated signaling.

### (2) Opt B: Dynamic allocation of location of 5 MHz for PDSCH

For an entire frequency domain (e.g., 20 MHz) of an (initial) BWP, when a UE receives DCI for MSG2 or MSGB and the DCI includes an index/indicator of a specific sub-BWP or a predefined BW location, the PDSCH scheduled by the DCI may be received in the indicated specific sub-BWP or predefined BW location.
- One of UE Opt A or B may be used or both Opt Aand B may be used. For example, even if a location of 5 MHz is predefined, DCI indicating cross-slot scheduling may change a location of 5 MHz of the scheduled PDSCH.
   1) Opt B1: Method of indicating index/indicator of specific sub-BWP or predefined BW location by specific bits or new field in FDRA field of DCI for entire frequency domain (e.g., 20 MHz) of an (initial) BWP

For example, when DCI of a PDCCH of FIG. 7 is received, if 20 MHz is divided into 4 sub-BWPs, 2 bit MSB or 2 bit LSB of FDRA indicates a specific sub-BWP or a predefined BW location. A UE receiving the DCI receives a PDSCH scheduled by DCI in the indicated sub-BWP or predefined BW location.

2) Opt B2: DCI includes a field in the form of a bitmap, each bit of a bitmap indicates a specific sub-BWP or a predefined BW location, and the DCI indicates the same RIV for one or multiple sub-BWPs indicated by the bitmap.

For example, when DCI is received through a PDCCH of FIG. 7, if a bitmap is 0011, the same RIV is applied to PDSCH transmission of a third or fourth sub-BWP or predefined BW location.

In the above methods, 2 bit MSB or 2 bit LSB in FDRA bits of DCI may also indicate a location of a sub-BWP of 5 MHz or a predefined BW location.

Meanwhile, for example, for MSG2 or MSGB, DCI may schedule multiple Rel.18 PDSCHs in the time domain, using different K0 values as follows:
- K0=1: Rel.18 PDSCH1
- K0=2: Rel.18 PDSCH2
- K0=3: Rel.18 PDSCH3
- K0=4: Rel.18 PDSCH4

In the FDM of FIG. 7, 4 PDSCHs may be allocated in the time domain with different K0 values as described above.

### Method 2: One DCI schedules more than one Rel. 18 PDSCH transmission for Rel. 18 RAR within or outside pre-Rel. 18 DL BWP for Rel. 18 RedCap UEs

For example, a Rel. 18 PDSCH transmission may be scheduled together with a pre-release 18 PDSCH transmission using a pre-release 18 search space/CORESET or pre-release 18 initial BWP. In this case, a pre-release 18 PDSCH may deliver MSG2 or MSGB for a pre-release 18 UE, and a Rel. 18 PDSCH may deliver MSG2 or MSGB for a Rel. 18 R-UE. Meanwhile, the BS may transmit the Rel. 18 PDSCH within or outside the pre-release 18 initial BWP, and configure a separate sub-BWP or BW location for the Rel. 18 PDSCH transmission within or outside the pre-release 18 initial BWP.

In this way, legacy DCI for pre-release 18 may schedule a pre-release PDSCH transmission and a Rel. 18 PDSCH transmission together. Therefore, the pre-Rel. 18 UE and the Rel. 18 UEs may monitor DCI for MSG2 or MSGB in the same RA window according to the configuration. For the Rel. 18 PDSCH transmission, reserved bits of the legacy DCI may include the following FDRA or TDRA information.

### 1) Opt 2-1: Reserved bits of legacy DCI indicate FDRA (e.g., Resource Indicator Value (RIV) of Allocation Type 1) for transmission of Rel.18 PDSCH.

TDRA applied to legacy PDSCH in DCI is also applied to Rel.18 PDSCH.
(i) Opt 2-1A: A K0 value and SLIV applied to the existing PDSCH are also applied to the Rel.18 PDSCH.
(ii) Opt 2-1B: SLIV applied to a legacy PDSCH is also applied to Rel.18 PDSCH transmission. However, a separate K0 value is applied to the legacy PDSCH and Rel.18 PDSCH, and reserved bits in legacy DCI indicate a separate K0 value.

### 2) Opt 2-2: Reserved bits of legacy DCI indicates TDRA for Rel.18 transmission.

The FDRA applied to the legacy PDSCH in the DCI is also applied to the Rel.18 PDSCH. The FDRA applied to the legacy PDSCH in the DCI is reflected in the sub BWP of 5 MHz or BW location for Rel.18 PDSCH.
(i) Opt 2-2A: SLIV applied to the legacy PDSCH is also applied to Rel.18 PDSCH transmission. However, a separate K0 value is applied to the legacy PDSCH and Rel.18 PDSCH, and reserved bits in the legacy DCI indicate a separate K0 value.
(ii) Opt 2-2B: A separate K0 value and SLIV value are applied to the existing PDSCH and Rel.18 PDSCH, and the separate K0 value and SLIV are indicated as reserved bits of the existing DCI.

For example, the DCI may schedule one pre-Rel.18 PDSCH and two Rel.18 PDSCHs in the time domain with different K0 values for MSG2 or MSGB as follows.
- K0=1: pre-R18 PDSCH for pre-R18 MSG2 or MSGB
- K0=2: Rel.18 PDSCH1 for Rel.18 MSG2 or MSGB
- K0=3: Rel.18 PDSCH2 for Rel.18 MSG2 or MSGB

### 3) Opt 2-3: Reserved bits of legacy DCI indicates both FDRA and TDRA for Rel.18 PDSCH transmission.

(i) Opt 2-3A: In the case of TDRA, SLIV applied to the legacy PDSCH is also applied to Rel.18 PDSCH transmission. However, a separate K0 value is applied to legacy PDSCH and Rel.18 PDSCH, and reserved bits in legacy DCI indicate a separate K0 value.
(ii) Opt 2-3B: In the case of TDRA, a separate K0 value and a SLIV value are applied to the legacy PDSCH and the Rel.18 PDSCH, and a separate K0 value and SLIV are indicated as reserved bits in the legacy DCI.
(iii) Opt 2-3C: In the case of FDRA allocation type 1, a separate RIV value is applied to the legacy PDSCH and the Rel.18 PDSCH, and a separate RIV value is indicated by reserved bits of legacy DCI and applied to Rel.18 (sub)BWP or BW location. For example, bandwidth of 5 MHz.
(iv) Opt 2-3D: In the case of FDRA allocation type 0, a separate RBG bitmap is applied to the legacy PDSCH and the Rel.18 PDSCH, and a separate RBG bitmap is indicated as reserved bits of the legacy DCI and applied to Rel.18 (sub)BWP or BW locations. For example, bandwidth of 5 MHz.

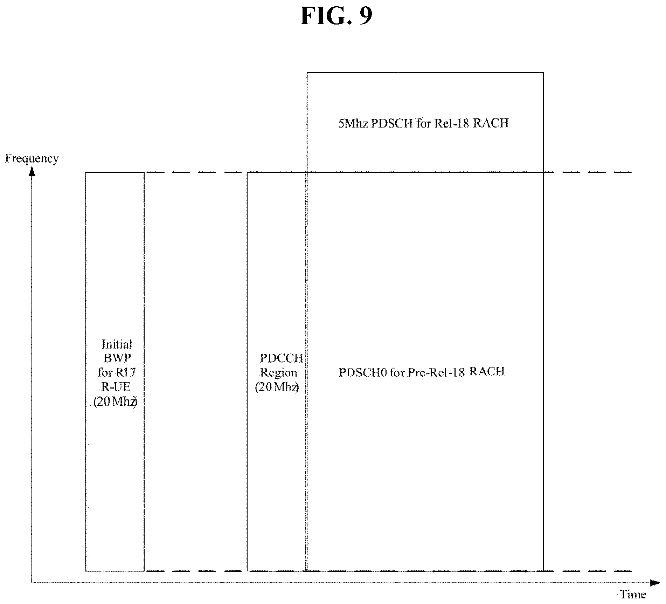

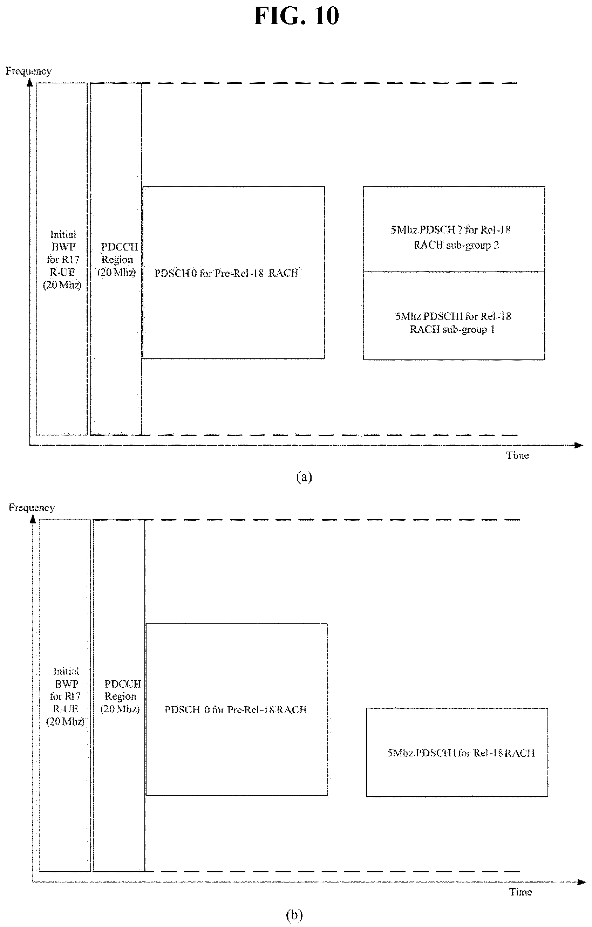

FIGS. 8 and 9 illustrate exemplary Rel. 18 PDSCH resource allocations for RACH responses using Opt 2-1. FIGS. 8 and 9B illustrate methods of applying the same TDRA but different FDRAs to a legacy PDSCH and a Rel. 18 PDSCH for RACH responses. FIG. 8 illustrates a case in which there are multiple Rel. 18 PDSCHs for RACH responses scheduled by DCI and they are all included in a legacy initial BWP (a Rel. 18 PDSCH resource allocation within 20MHz). Meanwhile, FIG. 9 illustrates a case in which there is only one Rel. 18 PDSCH for an RACH response scheduled by DCI, and it is not included in the legacy initial BWP (a Rel. 18 PDSCH resource allocation outside 20MHz). FIG. 10 illustrates exemplary Rel. 18 PDSCH resource allocations for RACH responses using Opt 2-2 or Opt 2-3. As illustrated in FIG. 10, according to Opt 2-2, FDRA bits for a legacy PDSCH may be applied to each 5MHz for Rel. 18 PDSCHs in the next slot. Further, as illustrated in FIG. 10, according to Opt 2-3, an FDRA and TDRA different from those of the legacy PDSCH may be applied to each 5MHz of Rel. 18 PDSCH(s).

In FIG. 10, the FDRA of a Rel. 18 PDSCH for an RACH response may be determined only with frequency resources belonging to a DL (sub-)BWP or DL BW location (e.g., 5MHz) of Rel. 18 among PRBs determined by the FDRA of the legacy PDSCH for an RACH response.

FIG. 9 may not be an appropriate configuration for the BW3 option.

### Method 3: Method of FDRA allocation type 0 and type 1 for 5-MHz PDSCH transmission for an RACH response for an Rel.18 R-UE

Method 3 below may be applied as follows for a PDSCH frequency resource allocation for an RACH response in a (sub-)BWP or BW location in Method 1 or Method 2.

For a Rel.18 UE, an FDRA may be determined as follows for a sub-BWP or BW location of the UE within an (initial) BWP:

### (1) FDRA Allocation Type0

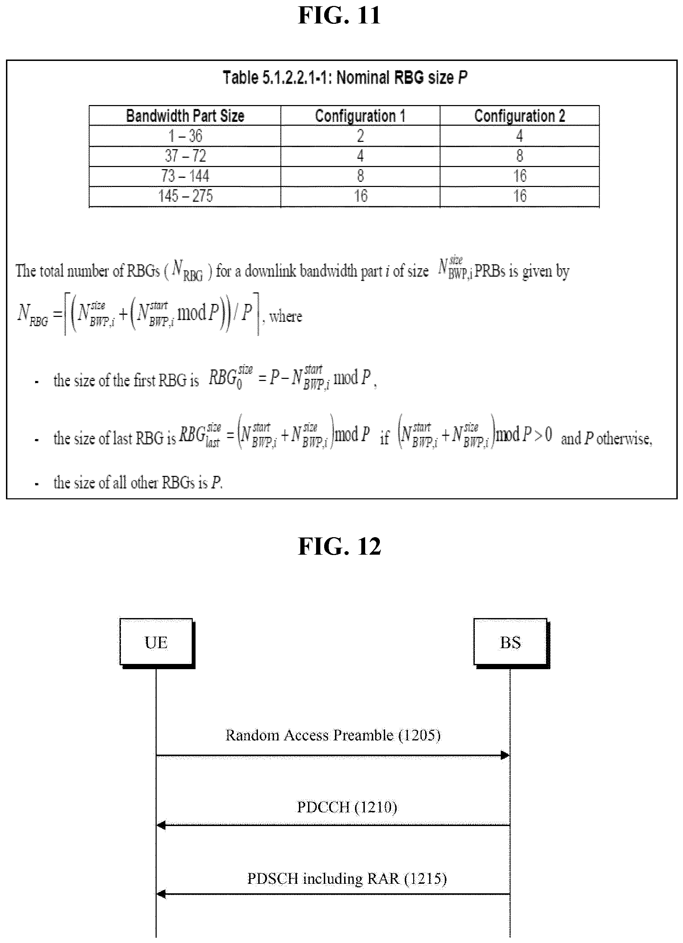

As shown in FIG. 11, the existing FDRA allocation type 0 may be based on the determined RBG size and the number of RBGs.
1) Opt A1-1: When PDSCH resources are allocated according to FDRA allocation type 0 (in the above box), a BWP size is calculated in units of a sub-BWP size or a predefined BW location size (e.g. 5MHz) in calculating the total numbers of RBGs and PRBs. For example, UE1 and UE2 that receive the same DCI and transmit different PRACH sub-groups apply the same FDRA to a lower 5MHz and an upper SMHz, respectively, and apply an RBG bitmap of the received DCI for each 5MHz to determine a PDSCH resource location for each 5MHz.
2) Opt A1-2: When a PDSCH resource is allocated according to FDRA allocation type0, DCI indicates RBGs of an entire BWP (e.g., 20 MHz) as a bitmap like in the conventional case, and a specific UE determines the location of a PDSCH to be received using only RBGs for the sub-BWP or predefined BW location configured for the specific UE.

In this case, the bitmap of the DCI may be configured as follows.
i) Opt A1-2a: The DCI includes a bitmap field for each sub-BWP or each predefined BW location. That is, the DCI includes one or more fields for one or more sub-BWPs or predefined BW locations.
ii) Opt A1-2b: The DCI includes one bitmap field, and one bitmap indicates FDRAs for a plurality of sub-BWPs or predefined BW locations. The UE finds start/end positions of bits mapped to an own sub-BWP or predefined BW location of the UE in the bitmap and applies FDRA for the PDSCH of an own sub-BWP or predefined BW location of the UE.

As such, the UE calculates the start/end position for all sub-BWP or predefined BW locations of the corresponding BWP within the bitmap, and accordingly, the UE finds bits within the bitmap for an own sub-BWP or predefined BW location of the UE and applies FDRA.

iii) Opt A1-2c: The DCI receives the PDSCH with only RBGs belonging to an own sub-BWP thereof in the bitmap for all RBGs of the BWP as in the conventional case.

At this time, when a boundary of the sub-BWP or predefined BW location divides the RBG near the boundary, one of the following two methods may be determined.
i) An RBG near the boundary is configured only with the RBG part included in the sub-BWP or predefined BW location. Therefore, a size of RGB near the boundary is determined to be smaller than the other RBG sizes; or
ii) The RBG part included in the sub-BWP or predefined BW location is included as a part of the adjacent RBG. Thus, the size of an adjacent RBG increases by the part of the included RBG.

### (2) FDRA Allocation Type1

When PDSCH resources are allocated according to FDRA allocation type1, each sub-BWP or each PRACH sub-group transmitted by a UE may be configured to have a different RB start as follows.
1) Opt A2-1: The BS may pre-specify an RB start value on a UE or PRACH sub-group basis. Depending on a configuration of the BS, an RB start value associated with a sub-BWP (or predefined BW location) of a UE or PRACH sub-group or a PRACH sub-group transmitted by the UE is determined.
   - For example, in DCI received through a PDCCH of FIG. H2, the RIV of the DCI indicates a lowest RB start value, a reference RB start value that serves as a reference, or RB start=0. For a UE receiving the DCI, an RB start is configured on a sub-BWP, predefined BW location, or PRACH sub-group basis. For example, when the RIV of the DCI indicates RB start=0, UE1 transmitting PRACH sub-group 1 and UE2 transmitting PRACH sub-group2 apply RB start1 and RB start2 respectively to calculate their respective FDRAs. As a result, the DCI indicating RB start=0 may indicate only an RB length common to the PRACH sub-groups, and the RB start may be semi-statically specified on a PRACH sub-group basis by an RRC message.
2) Opt A2-2: The UE determines whether to receive a PDSCH by determining whether there is a resource allocation for a sub-BWP corresponding to the UE or a PRACH sub-group, or a predefined BW location according to the RIV value of DCI.
   - For example, the UE configures the sub-BWP configured for the UE or the PRACH sub-group or the predefined BW location, for receiving MSG2 or MSGB within the initial BWP. Thereafter, when the UE receives DCI through a PDCCH in FIG. H2, it calculates contiguous PRBs for all PDSCHs within the initial BWP according to the RIV value of the DCI, calculates PDSCH transmission resources only with PRBs located within the sub-BWP configured for the UE or within the predefined BW location, and receives the corresponding PDSCH accordingly.
3) Opt A2-3: The UE calculates N PRB sets by dividing all contiguous PRBs according to an RIV value of DCI by 1/N, and selects one PRB set to receive the PDSCH. At this time, when the selected PRB set partially overlaps or does not overlap an own sub-BWP or predefined BW location frequency domain thereof, the UE may re-tune according to the PRB set.
   - For example, when DCI is received through the PDCCH of FIG. 7, contiguous PRBs for all PDSCHs in the initial BWP are calculated according to the RIV value of DCI, and all contiguous PRBs allocated according to the received RIV are divided by 1/N to calculate N A PRB sets and to select a PRB set.

   i)The UE selects one of the N PRB sets based on the index of a sub-BWP to which the UE belongs, a predefined BW location index, a PRACH sub-group index, or the UE ID of the UE, and receives a PDSCH according to the selected PRB set; or
   ii) The UE selects a PRB set belonging to the frequency area of its own sub-BWP or the predefined BW location. When the UE selects a plurality of PRB sets, the UE selects all of the PRB sets or one PRB set including the largest number of PRBs among the PRB sets.
4) Opt A2-4: DCI separately indicates an RIV value for each sub-BWP, each predefined BW location, or each PRACH sub-group. The fields of the DCI may be configured as follows:
   i) Opt A2-4a: An RIV value for each sub-BWP, each predefined BW location, or each PRACH sub-group is indicated by a different field for each sub-BWP or predefined BW location in DCI.
   ii) Opt A2-4b: An RIV value for each sub-BWP, each predefined BW location, or each PRACH sub-group is indicated by one field of DCI.
      The UE identifies the start/end position of RIV bits for its own sub-BWP, predefined BW location, or PRACH sub-group by considering all sub-BWPs, predefined BW locations, or PRACH sub-groups within a BWP.
   iii) Opt A2-4c: RB start values for the sub-BWPs, predefined BW locations, or PRACH sub-groups, other than an RIV value calculated based on RB start=0 or the lowest/highest/ref sub-BWP, are included in one or separate fields.

For example, an RIV value of DCI is indicated based on RB start=0, and the corresponding DCI additionally include RB start1 for UE1 and RB start2 for UE2.

An FDRA bit size in DCI may be determined using a sub-BWP size or a predefined BW size (e.g., 5 MHz) instead of CORESET0 size.

The methods may also be applied to UEs of other BW 1BW2 options as well as BW3 option. For example, after receiving DCI of 5 MHz, a UE of BW1/2 option may receive a PDSCH of 5 MHz by hoping a sub-BWP or a predefined BW location. In this case, DCI of 5 MHz and the frequency domain of 5 MHz of a PDSCH of 5 MHz therefor may be differently allocated.

The UE may determine whether to receive a specific PDSCH of 5 MHz according to allocation of the FDRA. For example, as the calculation result of FDRA of the PDSCH, when there is no PDSCH transmission resource within a sub-BWP or predefined BW location of the UE, a PDSCH for the DCI is not received. Alternatively, there is no PDSCH transmission resource within a sub-BWP or predefined BW location of the UE, a PDSCH of 5 MHz may be received via re-tuning.

### Sub-BWP (or predefined BW location) operation method of Rel.18 R-UE

A Rel.18 R-UE that has received sub-BWP configuration information through system information may select a DL sub-BWP or a UL sub-BWP as follows.
(1) Opt C1: One sub-BWP is selected among N sub-BWPs based on a UE-dedicated UE ID (e.g., s-TMSI or C-RNTI or I-RNTI).

For example, the same sub-BWP index as a value of UE ID mod N is selected and a sub-BWP corresponding thereto is selected.

(2) Opt C2: One sub-BWP is selected among N sub-BWPs according to a UE type of a UE.

For example, 1 RX UE selects sub-BWPIndex = 0, 2 RX UE selects sub-BWPIndex = 1, Half-Duplex UE selects sub-BWPIndex = 2, Full-Duplex UE selects sub-BWPIndex =3, 20 MHz UE selects sub-BWPIndex = 4, and 5 MHz UE selects a sub-BWP corresponding to sub-BWPIndex =5.

(3) Opt C3: The UE selects one sub-BWP according to a PRACH sub-group transmitted by the UE.

For example, a sub-BWPIndex mapped according to an index of a sub-group is selected, and a sub-BWP corresponding to the index is selected.

(4) Opt C4: Random selection.

For example, a UE randomly selects a random value between [0 and 1], and a BS compares the random value with a value of [0, N1, N2, N3,..., 1] transmitted using system information to select one sub-BWP. For example, when the random value is between [0 and N1], sub-BWPIndex = 0 is selected, when the random value is between [N1 and N2], sub-BWPIndex = 1 is selected, and when the random value is between [N2 and N3], sub-BWPIndex = 3 or the like is selected, and in this case, a sub-BWP corresponding to the index is selected.

(5) Opt C5: A sub-BWP is selected according to cell quality measured by the UE.

For example, when an RSRP measurement value of a serving cell is equal to or greater than a Q0 value, sub-BWP =0 is selected, when the RSRP measurement value is equal to or greater than a Q1 value, sub-BWP =1 is selected, and when the RSRP measurement value is equal to or greater than a Q2 value, sub-BWP =2 or the like is selected, and in this case, a sub-BWP corresponding to the index is selected.

(6) Opt C6: A sub-BWP is selected according to beam quality measured by the UE.

For example, when an SSB index of a best SSB of a serving cell is 0, 4, sub-BWP =0 is selected, when the SSB index of the best SSB is 1 and 5, sub-BWP =1 is selected, and when the SSB index of the best SSB is 2 and 6, sub-BWP =2, or the like is selected, and in this case, a sub-BWP corresponding to the index is selected.

(7) Opt C7: A sub-BWP is selected according to the purpose designated by the BS.
1) C7-0: The BS may designate a sub-BWP in which R-SIB1 of the Rel.18 R-UE is located as sub-BWPIndex = 0 (hereinafter referred to as sub-BWP0) through the MIB, the DCI scheduling the conventional SIB1, or the conventional SIB1 message. Alternatively, sub-BWPIndex = 0 may be configured to always transmit R-SIB1.

Therefore, the Rel.18 R-UE moves to sub-BWP0 and receives R-SIB1 of the Rel.18 R-UE after receiving MIB, receiving DCI scheduling conventional SIB1, or receiving a conventional SIB1 message.

Cell-defining SSB or non-cell-defining SSB for Rel.18 R-UE may be configured in Sub-BWP0. The Rel.18 R-UE obtains the Rel.18 SSB configuration information from the conventional SIB1 or R-SIB1.

The Rel.18 R-UE may measure Rel.18 SSB with BS configuration, and apply to idle mobility measurement for cell selection/reselection, or may apply the Rel.18 SSB measurement result to paging monitoring in a sub-BWP, PRACH preamble/resource selection in a sub-BWP, or the like.
2) C7-1: The BS may designate a sub-BWP in which transmission of other system information (i.e., SIBx, x>1) is located to sub-BWPIndex = 1 (hereinafter, sub-BWP1) through MIB, DCI scheduling the conventional SIB1, a conventional SIB1 message, or R-SIB1 of an Rel.18 R-UE. Alternatively, sub-BWPIndex = 1 may be configured to always transmit other system information.
3) C7-2: The BS may specify a sub-BWP where an MSG2/B transmission is located as sub-BWPIndex = 2 (hereinafter referred to as sub-BWP2) by an MIB, legacy DCI scheduling SIB1, an existing SIB1 message, or R-SIB1 of R18 R-UEs. Alternatively, sub-BWPIndex = 2 may always be configured for the R18 R-UE, for MSG2/B transmission.

In an alternative method, MSG2/B may be transmitted in k sub-BWPs among N sub-BWPs, and in this case, the following methods are available. (k = N or k < N).
i) Alt 2A: One of k sub-BWPs is selected in one of Opt C1, C2, C3, C4, C5, and C6 described above to monitor MSG2/B.
   - All of the k sub-BWPs are configured with RACH response search spaces.
ii) Alt 2B: Among the k sub-BWPs, one sub-BWP that the BS or core network (CN) node (e.g. AMF or MMF) indicates to the UE is selected to monitor MSG2/B.
   - For example, a sub-BWP configured with an RACH response search space is selected to monitor MSG2/B.
   - When the UE is inactive, the BS may indicate to the UE, and when the UE is idle, the CN node may indicate to the UE.
iii) Alt 2C: A sub-BWP indicated by an RRC Release message is selected to monitor MSG2/B.
   - For example, when the UE switches from the connected mode to the idle or inactive mode, the BS may indicate a sub-BWPIndex by the RRC Release message. The UE selects a sub-BWP according to the indicated sub-BWPIndex and monitors MSG2/B.

The Rel.18 R-UE defines the selected sub-BWP as follows.
(1) Opt D1: A selected sub-BWP is defined as an initial BWP of the Rel.18 R-UE.

The Rel.18 R-UE applies the selected sub-BWP to performing of the conventional initial BWP operation.

(2) Opt D2: The selected sub-BWP is defined as a BWP of a specific purpose of the Rel.18 R-UE.

For example, according to the Option C methods, the selected sub-BWP may be defined as a DL BWP for paging monitoring, defined as a UL/DL BWP for RACH, or may be defined as a UL/DL BWP for SDT.

### R-SIB1 reception of Rel.18 R-UE

The Rel.18 R-UE receives an Rel.18 PDSCH transmitting system information according to the methods 1, 2, and 3. In this case, the DCI of the methods 1, 2, and 3 is DCI having CRC scrambled with SI-RNTI.

When Rel.18 PDSCH transmits R-SIB1 for the Rel.18 R-UE, the DCI may schedule the Rel.18 PDSCH for the R-SIB1 as follows.
(1) Opt 1: One DCI on CORESET shared by the pre-Rel.18 UE and the Rel.18 UE schedules the pre-Rel.18 SIB1 as well as the Rel.18 R-SIB1 within an initial DL BWP of 20 MHz with FDM (e.g., FIG. 8).
(2) Opt 2: One DCI on CORESET shared by the pre-Rel.18 UE and the Rel.18 UE schedules the pre-Rel.18 SIB1 within an initial DL BWP of 20 MHz as well as the Rel.18 R-SIB1 outside an initial DL BWP of 20 MHz with FDM (e.g., FIG. 9).
(3) Opt 3: One DCI on CORESET shared by the pre-Rel.18 UE and the Rel.18 UE schedules the pre-Rel.18 SIB1 as well as the Rel.18 R-SIB1 within an initial DL BWP of 20 MHz with TDM (e.g., FIG. 10(b)).

The Rel.18 PDSCH transferring the Rel.18 R-SIB1 in the Opt3 is scheduled within a (sub)BWP of 5 MHz or a BW location but the legacy PDSCH transferring the pre-Rel.18 SIB1 is scheduled within an initial BWP of 5MHz or an initial BWP of 20 MHz.

A BS may indicate whether DCI schedules both the Rel.18 R-SIB1 and the pre-Rel.18 SIB1 through the DCI or MIB as in the Opt.

When the Rel.18 R-UE receives DCI for scheduling the conventional SIB1 or the conventional SIB1, the Rel.18 R-UE receives a separate cellBarred parameter for the Rel.18 RUE from the conventional SIB1 or DCI for scheduling the conventional SIB1. According to the received cellBarred parameter, whether the Rel.18 R-UE is capable of accessing a corresponding cell or whether the cell needs to be barred is determined.

When the Rel.18 R-UE receives a new R-SIB1 or DCI scheduling R-SIB1 without receiving the conventional SIB1, the Rel.18 R-UE selects the sub-BWP for R-SIB1, and selects the DCI of the selected sub-BWP or a separate cellBarred parameter for the Rel.18 R-UE from R-SIB1. According to the received cellBarred parameter, whether the Rel.18 R-UE is capable of accessing the corresponding cell or whether the cell needs to be barred is determined.

FIG. 12 illustrates a flowchart illustrating a method of performing a random access procedure according to an embodiment.

Referring to FIG. 12, a UE may transmit a random access preamble through a PRACH (1205).

The UE may receive DCI that schedules an RAR for the transmission of the random access preamble through a PDCCH in a first time period (1210).

The UE may receive a PDSCH including the RAR based on the DCI (1215).

The UE is a first type RedCap UE supporting different bandwidths for the PDCCH and the PDSCH among the first type RedCap UE and a second type RedCap UE supporting the same bandwidth for the PDCCH and the PDSCH, and the first time period is set for an RAR of the first type RedCap UE excluding an RAR of the second type RedCap UE.

The first type RedCap UE may support a bandwidth of 5MHz or more for the PDCCH and a bandwidth of 5MHz or less for the PDSCH.

The second type RedCap UE may support a bandwidth of 5MHz or more for the PDCCH and the PDSCH.

A bandwidth supported for the PDSCH by the second type RedCap UE may be smaller than a bandwidth supported for the PDCCH by the second type RedCap UE.

A frequency area for the first type RedCap UE may belong to a first BWP, and the first BWP may be shared between the first type RedCap UE and the second type RedCap UE.

The first time period may be different from a second time period configured for the RAR of the second type UE.

The random access preamble may be a first random access preamble configured for the first type RedCap UE, and the first random access preamble may be different from a second random access preamble configured for the second type RedCap UE.

The PRACH may be transmitted in a first PRACH resource configured for the first type RedCap UE, and the first PRACH resource may be different from a second PRACH resource configured for the second type RedCap UE.

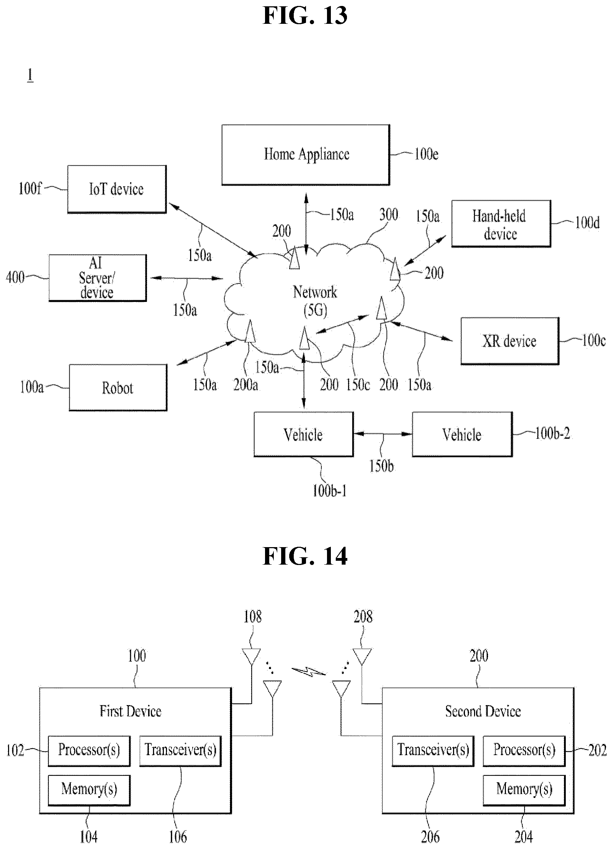

FIG. 13 illustrates a communication system 1 applied to the present disclosure.

Referring to FIG. 13, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 14 illustrates wireless devices applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

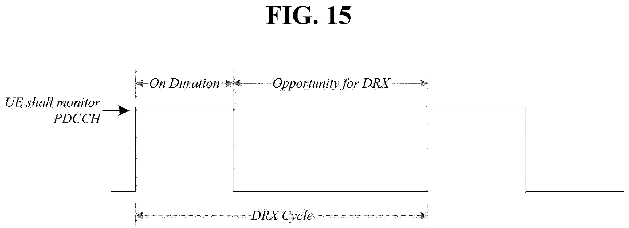

FIG. 15 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

A DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

The above-described embodiments are combinations of elements and features of the present disclosure in specific forms. The elements or features may be considered selective unless mentioned otherwise. Each element or feature may be implemented without being combined with other elements or features. Further, the embodiments of the present disclosure may be configured by combining some elements and/or some features. Operation orders described in the embodiments of the present disclosure may be rearranged. Some constructions or features of any one embodiment may be included in another embodiment or may be replaced with corresponding constructions or features of another embodiment. It is obvious that claims that are not explicitly cited in the appended claims may be presented in combination as an embodiment of the present disclosure or included as a new claim by subsequent amendment after the application is filed.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure is applicable to UEs, BSs, or other apparatuses in a wireless mobile communication system.

## Claims

1. A method of performing a random access procedure by a user equipment (UE) in a wireless communication system, the method comprising:
transmitting a random access preamble through a physical random access channel (PRACH);
receiving, through a physical downlink control channel (PDCCH) in a first time period, downlink control information (DCI) scheduling a random access response (RAR) for the transmission of the random access preamble; and
receiving a physical downlink shared channel (PDSCH) including the RAR based on the DCI,
wherein the UE is a first type reduced capability (RedCap) UE supporting different bandwidths for the PDCCH and the PDSCH among the first type RedCap UE and a second type RedCap UE supporting a same bandwidth for the PDCCH and the PDSCH, and
wherein the first time period is set for an RAR of the first type RedCap UE excluding an RAR of the second type RedCap UE.

2. The method of claim 1, wherein the first type RedCap UE supports a bandwidth of 5MHz or more for the PDCCH and a bandwidth of 5MHz or less for the PDSCH.

3. The method of claim 1, wherein the second type RedCap UE supports a bandwidth of 5MHz or more for the PDCCH and the PDSCH.

4. The method of claim 1, wherein a bandwidth supported for the PDSCH by the second type RedCap UE is smaller than a bandwidth supported for the PDCCH by the second type RedCap UE.

5. The method of claim 1, wherein a frequency area for the first type RedCap UE belongs to a first bandwidth part (BWP), and
wherein the first BWP is shared between the first type RedCap UE and the second type RedCap UE.

6. The method of claim 1, wherein the first time period is different from a second time period set for the RAR of the second type RedCap UE.

7. The method of claim 1, wherein the random access preamble is a first random access preamble configured for the first type RedCap UE, and
wherein the first random access preamble is different from a second random access preamble configured for the second type RedCap UE.

8. The method of claim 1, wherein the PRACH is transmitted in a first PRACH resource configured for the first type RedCap UE, and
wherein the first PRACH resource is different from a second PRACH resource configured for the second type RedCap UE.

9. A computer-readable recording medium recording instructions for performing the method of claim 1.

10. A device for wireless communication, the device comprising:
a memory configured to store instructions; and
a processor configured to perform operations by executing the instructions,
wherein the operations of the processor include:
transmitting a random access preamble through a physical random access channel (PRACH);
receiving downlink control information (DCI) scheduling a random access response (RAR) for the transmission of the random access preamble through a physical downlink control channel (PDCCH) in a first time period; and
receiving a physical downlink shared channel (PDSCH) including the RAR based on the DCI,
wherein the device is a first type reduced capability (RedCap) device supporting different bandwidths for the PDCCH and the PDSCH out of the first type RedCap UE and a second type RedCap device supporting a same bandwidth for the PDCCH and the PDSCH, and
wherein the first time period is set for an RAR of the first type RedCap device excluding an RAR of the second type RedCap device.

11. The device of claim 10, further including a transceiver transmitting or receiving a signal under the control of the processor,
wherein the device is a user equipment (UE) operating in a wireless communication system.

12. The device of claim 10, wherein the device is an application specific processor (ASIC) or digital signal processing device controlling the UE operating in the wireless communication system.

13. A method of performing a random access procedure with a user equipment (UE) by a base station (BS) in a wireless communication system, the method comprising:
receiving a random access preamble from the UE through a physical random access channel (PRACH);
transmitting downlink control information (DCI) scheduling a random access response (RAR) for the transmission of the random access preamble to the UE through a physical downlink control channel (PDCCH); and
transmitting a physical downlink shared channel (PDSCH) including the RAR based on the DCI,
wherein based on the UE being a first type reduced capability (RedCap) UE supporting different bandwidths for the PDCCH and the PDSCH among the first type RedCap UE and a second type RedCap UE supporting the same bandwidth for the PDCCH and the PDSCH, the BS schedules the RAR for the UE in a first time period set for an RAR of the first type RedCap UE excluding an RAR of the second type RedCap UE.

14. A base station (BS) in a wireless communication system, the BS comprising:
a memory configured to store instructions; and
a processor configured to perform operations by executing the instructions,
wherein the operations of the processor include:
receiving a random access preamble from a user equipment (UE) through a physical random access channel (PRACH);
transmitting downlink control information (DCI) scheduling a random access response (RAR) for the transmission of the random access preamble to the UE through a physical downlink control channel (PDCCH); and
transmitting a physical downlink shared channel (PDSCH) including the RAR based on the DCI, and
wherein based on the UE being a first type reduced capability (RedCap) UE supporting different bandwidths for the PDCCH and the PDSCH among the first type RedCap UE and a second type RedCap UE supporting the same bandwidth for the PDCCH and the PDSCH, the BS schedules the RAR for the UE in a first time period set for an RAR of the first type RedCap UE excluding an RAR of the second type RedCap UE.
